# EUROPEAN PATENT SPECIFICATION

(11) **EP 2 934 929 B1**
(45) Date of publication and mention of the grant of the patent: **25.04.2018**
(21) Application number: 13818110.2
(22) Date of filing: 17.12.2013
(51) Int. Cl.: B60K 6/445, B60K 6/387, B60K 6/48

(54) **MULTI-MODE HYBRID VARIABLE DRIVE UNIT**
HYBRIDE, MULTIMODALE, VARIABLE ANTRIEBSEINHEIT
UNITÉ D'ENTRAÎNEMENT VARIABLE HYBRIDE MULTI-MODE

(30) Priority: 18.12.2012 US 201213718612
(43) Date of publication of application: 28.10.2015
(73) Proprietor: FCA US LLC, Auburn Hills, MI 48326 (US)
(72) Inventor: PUIU, Dumitru, Sterling Heights, MI 48314 (US); MILLER, Scott A., Northville, MI 48168 (US)
(74) Representative: Studio Torta S.p.A.
(86) International application number: PCT/US2013/075571
(87) International publication number: WO 2014/099857

(56) References cited:
- EP-A2- 1 247 679
- DE-A1-102007 022 129
- US-A1- 2008 207 375
- US-A1- 2011 053 724
- US-A1- 2011 086 737
- US-A1- 2011 111 907

## Description

### FIELD

The present disclosure relates to a hybrid drive unit, more particularly, to a multi-mode hybrid variable drive unit.

### BACKGROUND

Many modern automobiles utilize a hybrid transmission system in which an internal combustion engine, electric machine(s), or combination of the two provides propulsion for the vehicle. In a typical hybrid transmission system, torque from the engine and electric machines is supplied to a plurality of gears to drive the wheels of the vehicle. Many typical hybrid transmissions provide only a single mode of operation. This single mode of operation presents overall system compromises. A decision must be made between a transmission that provides optimum torque during low speed operation or optimum efficiency for operation at highway speeds. Many typical hybrid transmissions are unable to provide both optimum low speed torque and highway speed efficiency. Typically, in an attempt to remedy this problem, large and powerful electric machines must be used. However, large and powerful electric machines are more expensive and take up more space within the hybrid transmission.

Alternatively, some hybrid transmissions provide multiple modes of operation whereby different transmission gear ratios may be achieved. However, typical prior art multi-mode hybrid transmissions include many gears and clutches and are very inefficient. For example, many prior art hybrid transmissions feature multiple planetary gear sets that must rotate at all times. This negatively impacts vehicle fuel economy. Moreover, many prior art hybrid transmissions are complex and large in size. This increases manufacturing costs and makes it difficult to fit the hybrid transmission within the vehicle.
Therefore, improvement in the art is desirable. DE-A-10 2007 022129 discloses a hybrid drive unit comprising a first planetary gear set, a second planetary gear set, a first electric machine and a second electric machine coupled to the first planetary gear set, a first clutch mechanism configured to selectively lock the second planetary gear set and a second clutch mechanism configured to selectively couple a ring gear of the second planetary gear set to a hybrid drive unit housing.

It is an object of the invention to improve this hybrid drive unit.

### SUMMARY

The present invention relates to a hybrid drive unit as claimed in claim 1.

Thus, a hybrid transmission is provided that offers multiple modes of operation in a compact package. The hybrid transmission utilizes smaller and more compact electric machines. The hybrid transmission also features simpler construction than prior art designs.

Further areas of applicability of the present disclosure will become apparent from the detailed description provided hereinafter. It should be understood that the detailed description, including disclosed embodiments and drawings, are merely exemplary in nature intended for purposes of illustration only and are not intended to limit the scope of the invention, its application or use. Thus, variations that do not depart from the gist of the invention are intended to be within the scope of the invention.

### BRIEF DESCRIPTION OF THE DRAWINGS

Figure 1 is a schematic representation of an exemplary hybrid drive unit constructed in accordance with the disclosed principles; and
Figure 2 is a schematic representation of another exemplary hybrid drive unit constructed in accordance with the disclosed principles, however, not being part of the invention.

### DETAILED DESCRIPTION

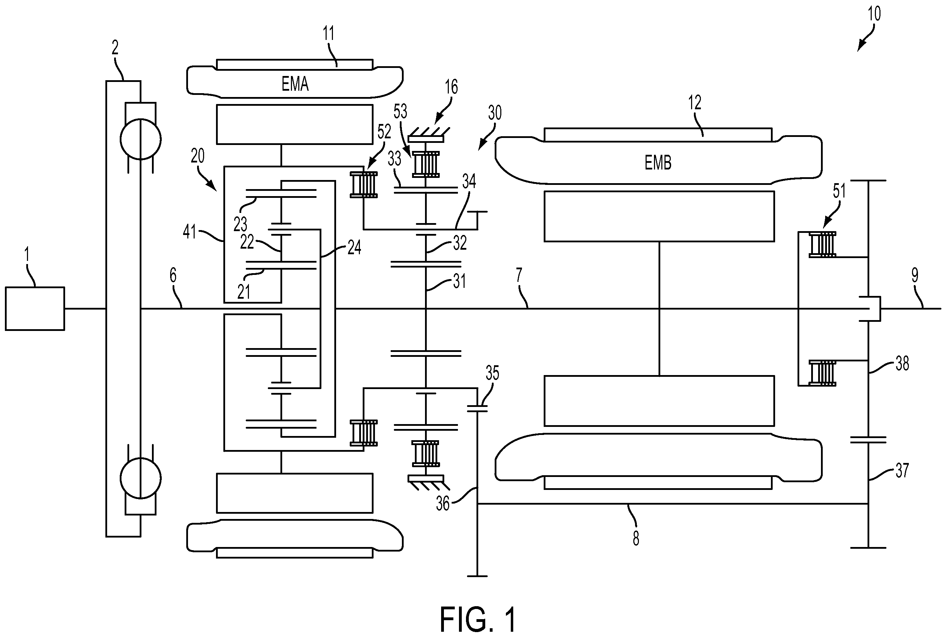

Figure 1 is an example schematic representation of a hybrid drive unit 10 according to an embodiment disclosed herein. An engine 1 is coupled to a torsional vibration damper 2. The engine 1 may be any type of power source including an internal combustion engine, turbine engine, electric machine, or any other desired power source. The torsional vibration damper 2 is coupled to a hybrid drive unit 10 by a hybrid input shaft 6. The hybrid input shaft 6 couples the torsional vibration damper 2 to a carrier 24 of a first planetary gear set 20. A plurality of planet gears 22 are rotationally mounted on the carrier 24 and are continuously meshed with a sun gear 21 and a ring gear 23. The sun gear 21 is coupled by a shaft 41 to a first electric machine 11 ("EMA"). The ring gear 23 is coupled by a shaft 7 to a second electric machine 12 ("EMB"). The first electric machine 11 and second electric machine 12 may be electric motors, electric generators, or any other type of desired power source.

Shaft 41 is also coupled to a second clutch mechanism 52 that selectively couples shaft 41 to a carrier 34 of a second planetary gear set 30. A plurality of planet gears 32 are rotationally mounted on the carrier 34 and are continuously meshed with a sun gear 31 and a ring gear 33. The ring gear 33 is also coupled to a third clutch mechanism 53. The third clutch mechanism 53 selectively couples the ring gear 33 to a hybrid assembly housing 16. The sun gear 31 is coupled to shaft 7. The carrier 34 is also coupled to a first driver gear 35 that is continuously meshed with a first driven gear 36. The first driven gear 36 is coupled by a shaft 8 to a second driver gear 37. The second driver gear 37 is continuously meshed with a second driven gear 38 that is coupled to an output shaft 9. Shaft 7 is also coupled to a first clutch mechanism 51 that selectively couples shaft 7 to the second driven gear 38.

The hybrid drive unit 10 of Figure 1 may be operated in three different modes referred to herein as Mode 1, Mode 2, and Mode 3. To operate the hybrid drive unit 10 in Mode 1, the third clutch mechanism 53 is activated, thereby, coupling the ring gear 33 to hybrid assembly housing 16. The first clutch mechanism 51 and second clutch mechanism 52 are deactivated. Thus, shaft 7 is free to rotate at a different RPM than second driven gear 38 and shaft 41 is free to rotate at a different RPM than carrier 34. Torque to the output shaft 9 may be provided by the engine 1 in combination with the second electric machine 12. The first electric machine 11 may be used to generate electricity during vehicle braking or as otherwise desired. In one embodiment, the hybrid drive unit 10 achieves a hybrid drive unit gear ratio of approximately 4.5:1 when operated in Mode 1.

To transition the hybrid drive unit 10 from operation in Mode 1 to operation in Mode 2, the first electric machine 11 is powered to cause the RPM of shaft 41 to approximately match the RPM of carrier 34. In one embodiment, the engine 1, second electric machine 12, first electric machine 11, or any combination of the three may be utilized to cause the RPM of shaft 41 to approximately match the RPM of carrier 34. Once the RPM of shaft 41 approximately matches the RPM of carrier 34, the second clutch mechanism 52 is activated followed by deactivation of the third clutch mechanism 53. In one embodiment, the shifting process includes activation of the second clutch mechanism 52 and deactivation of the third clutch mechanism 53 and takes approximately 500 milliseconds. In one embodiment, the shift takes more than 500 milliseconds. In another embodiment, the shift takes less than 500 milliseconds. A shift from Mode 2 to Mode 1 would be performed in a manner similar to the shift from Mode 1 to Mode 2 except that one, or any combination of the engine 1, second electric machine 12, first electric machine 11, would be utilized to cause the RPM of ring gear 33 to be approximately the same as the RPM of hybrid assembly housing 16. Then, the first clutch mechanism 51 would be activated, followed by deactivation of the second clutch mechanism 52.

To operate the hybrid drive unit 10 in Mode 2, the second clutch mechanism 52 is activated, thereby, coupling shaft 41 to carrier 34. The first clutch mechanism 51 and third clutch mechanism 53 are deactivated. Thus, shaft 7 is free to rotate at a different RPM than second driven gear 38 and ring gear 33 is free to rotate at a different RPM than hybrid assembly housing 16. Torque to the output shaft 9 may be provided by the engine 1 in combination with the first electric machine 11. The second electric machine 12 may be used to generate electricity during vehicle braking or as otherwise desired. When the hybrid drive unit 10 is operated in Mode 2, the second planetary gear set 30 is locked and, thereby, unloaded. Locking and unloading the second planetary gear set 30 reduces friction losses within the hybrid drive unit 10. In one embodiment, the hybrid drive unit 10 achieves a hybrid drive unit gear ratio of between approximately 4.5:1 and 1:1 when operated in Mode 2.

To transition the hybrid drive unit 10 from operation in Mode 2 to operation in Mode 3, the engine 1 and second electric machine 12 are powered to cause the RPM of shaft 7 to approximately match the RPM of second driven gear 38. Simultaneously, the first electric machine 11 is operated at an approximately constant RPM. Once the RPM of shaft 7 approximately matches the RPM of second driven gear 38, the first clutch mechanism 51 is activated. In one embodiment, the shifting process includes activation of the first clutch mechanism 51 and takes approximately 500 milliseconds. In one embodiment, the shift takes more than 500 milliseconds. In another embodiment, the shift takes less than 500 milliseconds. A shift from Mode 3 to Mode 2 would be performed by simply deactivating the first clutch mechanism 51.

To operate the hybrid drive unit 10 in Mode 3, the first clutch mechanism 51 and second clutch mechanism 52 are activated. Thus, shaft 7 is coupled to second driven gear 38 and shaft 41 is coupled to carrier 34. The third clutch mechanism 53 is deactivated, thereby allowing ring gear 33 to rotate at a different RPM than hybrid assembly housing 16. Torque to the output shaft 9 may be provided by the engine 1 in combination with the second electric machine 12. The first electric machine 11 may be used to generate electricity during vehicle braking or as otherwise desired. In one embodiment, the hybrid drive unit 10 achieves a hybrid drive unit gear ratio of approximately 1:1 when operated in Mode 3.

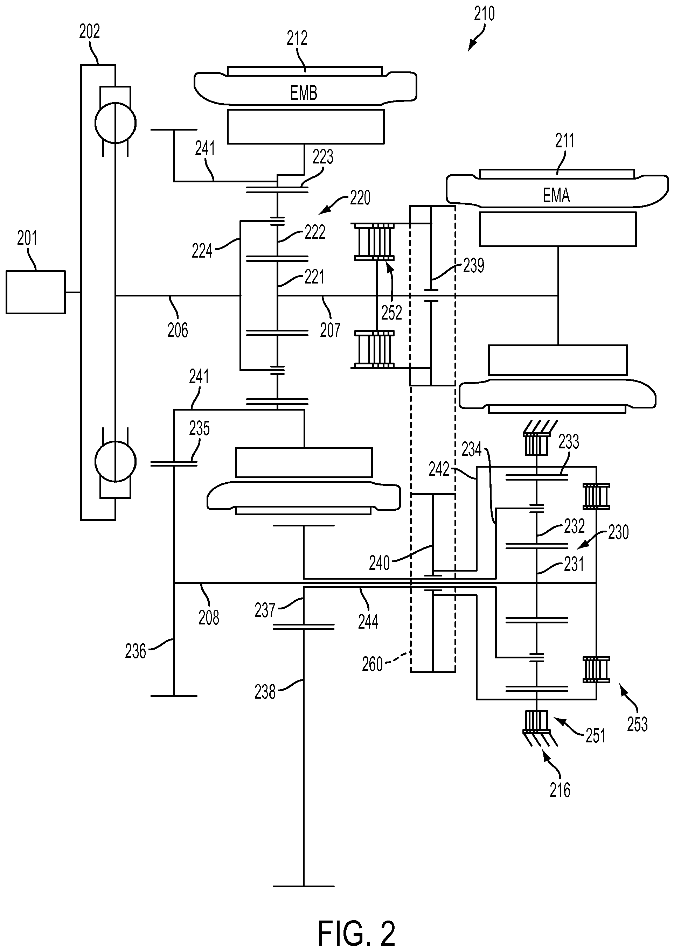

Figure 2 illustrates an example of another hybrid drive unit 210 according to another embodiment disclosed herein. An engine 201 is coupled to a torsional vibration damper 202. The engine 201 may be any type of power source including an internal combustion engine, turbine engine, electric machine, or any other desired power source. The torsional vibration damper 202 is coupled to a hybrid drive unit 210 by a hybrid input shaft 206. The hybrid input shaft 206 couples the torsional vibration damper 202 to a carrier 224 of a first planetary gear set 220. A plurality of planet gears 222 are rotationally mounted on the carrier 224 and are continuously meshed with a sun gear 221 and a ring gear 223. The sun gear 221 is coupled by a shaft 207 to a first electric machine 211 ("EMA"). The ring gear 223 is coupled to a second electric machine 212 ("EMB"). The first electric machine 211 and second electric machine 212 may be an electric motor, electric generator, or any other type of desired power source.

Shaft 207 is also coupled to a second clutch mechanism 252 that selectively couples shaft 207 to a first driver gear 239. The first driver gear 239 is coupled by a chain drive 260 to a first driven gear 240. The chain drive 260 may be a chain, belt, or any other suitable linkage. The first driven gear 240 is coupled by a shaft 242 to a ring gear 233 of a second planetary gear set 230. The ring gear is continuously meshed with a plurality of planet gears 232 rotationally mounted on a carrier 234. The plurality of planet gears 232 are continuously meshed with a sun gear 231. The sun gear 231 is coupled by a shaft 208 to a second driven gear 236. A first clutch mechanism 251 selectively couples shaft 242 to a hybrid assembly housing 216. A third clutch mechanism 253 selectively couples shaft 242 to shaft 208 and, thereby, sun gear 231.

The second driven gear 236 is continuously meshed with a second driver gear 235 coupled by a shaft 241 to the first electric machine 212 and ring gear 223. The carrier 234 is coupled by a shaft 244 to an output driver gear 237 that is continuously meshed with an output driven gear 238. In one embodiment, the output driven gear 238 may directly or otherwise connected to a vehicle's wheels (not shown).

The hybrid drive unit 210 of Figure 2 may be operated in two different modes: Mode 1 and Mode 2. To operate the hybrid drive unit 210 in Mode 1, the first clutch mechanism 251 is activated, thereby, coupling shaft 242 to hybrid assembly housing 216. The second clutch mechanism 252 and third clutch mechanism 253 are deactivated. Thus, shaft 207 is free to rotate at a different RPM than first driver gear 239 and shaft 242 is free to rotate at a different RPM than sun gear 231. Because the first clutch mechanism 251 is activated, the second planetary gear set 230 is effectively locked and, thereby, unloaded. Locking and unloading the second planetary gear set 230 reduces friction losses within the hybrid drive unit 210. Torque to the output driven gear 238 may be provided by the engine 201 in combination with the second electric machine 212. The first electric machine 211 may be used to generate electricity during vehicle braking or as otherwise desired.

To transition the hybrid drive unit 210 from operation in Mode 1 to operation in Mode 2, the second clutch mechanism 252 is activated. Once the second clutch mechanism 252 is fully activated, the first clutch mechanism 251 is deactivated. During this transition period, the first electric machine 211 is used to provide torque and the second electric machine 212 is used to generate electricity. The engine 201, first electric machine 211, second electric machine 212, or any combination of the three, are used to cause the RPM of shaft 242 to be approximately the same as the RPM of sun gear 231. Once the RPM of shaft 242 is approximately the same as the RPM of sun gear 231, the third clutch mechanism 252 is activated followed by deactivation of the second clutch mechanism 252. In one embodiment, the shifting process includes activation of the second clutch mechanism 252, deactivation of the first clutch mechanism 251, activation of the third clutch mechanism 253, deactivation of the second clutch mechanism 252 and takes approximately 500 milliseconds. In one embodiment, the shift takes more than 500 milliseconds. In another embodiment, the shift takes less than 500 milliseconds.

A shift from Mode 2 to Mode 1 would be performed in a similar manner except that one, or any combination of the engine 201, second electric machine 212, first electric machine 211, would be utilized to cause the RPM of shaft 207 to be approximately the same as the RPM of first driver gear 239. Then, the second clutch mechanism 252 would be activated followed by deactivation of the third clutch mechanism 253. Next, the first clutch mechanism 251 would be activated, followed by deactivation of the second clutch mechanism 252.

To operate the hybrid drive unit 210 in Mode 2, the third clutch mechanism 253 is activated, coupling shaft 242 to sun gear 231. The first clutch mechanism 251 and second clutch mechanism 252 are deactivated. Thus, shaft 242 is free to rotate at a different RPM than hybrid assembly housing 216 and shaft 207 is free to rotate at a different RPM than first driver gear 239. Torque to the output driven gear 238 may be provided by the engine 201 in combination with the second electric machine 212. The first electric machine 211 may be used to generate electricity during vehicle braking or as otherwise desired.

In one embodiment, the first clutch mechanism 51, second clutch mechanism 52, and third clutch mechanism 53 may be any desired type of coupling device including a wet clutch, dry clutch, dog clutch, or multi-plate clutch. In one embodiment, the clutch mechanisms 51, 52, 53 may couple together two components when they are rotating within a predetermined RPM of each other. For instance, the clutch mechanisms 51, 52, 53 may couple together two components once they are rotating within approximately 50 RPM of each other. In another embodiment, the clutch mechanisms 51, 52, 53 may couple together two components once they are rotating within greater than or less than 50 RPM of each other. As an example, a wet clutch, dry clutch, or multi-plate clutch may be used to couple together two components rotating within approximately 50 RPM of each other. In another embodiment, the clutch mechanisms 51, 52, 53 may couple together two components only once they are rotating at approximately the same RPM. As an example, a dog clutch may be used to couple together two components rotating at approximately the same RPM.

Thus, a hybrid transmission providing multiple modes of operation in a compact package is disclosed herein. Moreover, the hybrid transmission includes smaller and more compact electric machines. The hybrid transmission also features simpler construction than prior art designs, because it utilizes fewer parts.

## Claims

1. A hybrid drive unit, comprising:
a hybrid input shaft (6);
a first planetary gear set (20) coupled to said hybrid input shaft (6), comprising:
a first planetary gear set sun gear (21);
a first planetary gear set carrier (24); and
a first planetary gear set ring gear (23);
a second planetary gear set (30) coupled to said first planetary gear set (20), comprising:
a second planetary gear set sun gear (31);
a second planetary gear set carrier (34); and
a second planetary gear set ring gear (33);
a first electric machine (EMA) coupled to said first planetary gear set sun gear (21);
a second electric machine (EMB) coupled to said first planetary gear set ring gear (23);
a first clutch mechanism (52) configured to selectively unload said second planetary gear set (30);
a second clutch mechanism (53) configured to selectively couple said second planetary gear set ring gear (33) to a hybrid drive unit housing (16);
a third clutch mechanism (51);
an output shaft (9); and **characterized by**:
said first planetary gear set carrier (24) is coupled to said hybrid input shaft (6) and said second planetary gear set sun gear (31) is coupled to said first planetary gear set ring gear (23),
said second planetary gear set carrier (34) is selectively coupled to said first planetary gear set sun gear (21) by said first clutch mechanism (52),
said second planetary gear set carrier (34) is coupled to said output shaft (9),
said first planetary gear set ring gear (23), said second planetary gear set sun gear (31), and said second electric machine (EMB) are all selectively coupled to said output shaft (9) by said third clutch mechanism (51), and
said second planetary gear set carrier (34) is coupled to said output shaft (9) by a plurality of gears (35, 36, 37, 38).

2. The hybrid drive unit of claim 1, wherein said first clutch mechanism (52), second clutch mechanism (53), and third clutch mechanism (51) are selected from the group comprising a wet clutch, dry clutch, dog clutch, and multi-plate clutch.

3. The hybrid drive unit of claim 1, wherein said first clutch mechanism (52) and second clutch mechanism (53) are dog clutches.

## Patentansprüche

1. Hybridantriebseinheit; umfassend:
eine Hybrideingangswelle (6):
einen ersten Planetengetriebesatz (20), der an die Hybrideingangswelle (6) gekuppelt ist, umfassend:
ein erstes Planetengetriebesatzsonnenrad (21);
einen ersten Planetengetriebesatzträger (24) und ein erstes Planetengetriebesatzhohlrad (23);
einen zweiten Planetengetriebesatz (30), der an den ersten Planetengetriebesatz (20) gekuppelt ist, umfassend:
ein zweites Planetengetriebesatzsonnenrad (31);
einen zweiten Planetengetriebesatzträger (34) und ein zweites Planetengetriebesatzhohlrad (33);
eine erste Elektromaschine (EMA), die an das erste Planetengetriebesatzsonnenrad (21) gekuppelt ist;
eine zweite Elektromaschine (EMB), die an das erste Planetengetriebesatzhohlrad (23) gekuppelt ist;
einen ersten Kupplungsmechanismus (52), der konfiguriert ist, um selektiv den zweiten Planetengetriebesatz (30) zu entladen;
einen zweiten Kupplungsmechanismus (53), der konfiguriert ist, um selektiv das zweite Planetengetriebesatzhohlrad (33) an ein Hybridantriebseinheitsgehäuse (16) zu kuppeln;
einen dritten Kupplungsmechanismus (51);
eine Ausgangswelle (9); und
**dadurch gekennzeichnet, dass**:
der erste Planetengetriebesatzträger (24) an die Hybrideingangswelle (6) gekuppelt ist und das zweite Planetengetriebesatzsonnenrad (31) an das erste Planetengetriebesatzhohlrad (23) gekuppelt ist,
der zweite Planetengetriebesatzträger (34) selektiv an das erste Planetengetriebesatzsonnenrad (21) durch den ersten Kupplungsmechanismus (52) gekuppelt ist,
der zweite Planetengetriebesatzträger (34) an die Ausgangswelle (9) gekuppelt ist,
das erste Planetengetriebesatzhohlrad (23), das zweite Planetengetriebesatzsonnenrad (31) und die zweite Elektromaschine (EMB) alle selektiv an die Ausgangswelle (9) durch den dritten Kupplungsmechanismus (51) gekuppelt sind, und
der zweite Planetengetriebesatzträger (34) an die Ausgangswelle (9) durch mehrere Getriebe (35, 36, 37, 38) gekuppelt ist.

2. Hybridantriebseinheit nach Anspruch 1, wobei der erste Kupplungsmechanismus (52) der zweite Kupplungsmechanismus (53) und der dritte Kupplungsmechanismus (51) aus der Gruppe ausgewählt sind, die eine Nasskupplung, Trockenkupplung, Klauenkupplung und Mehrscheibenkupplung umfasst.

3. Hybridantriebseinheit nach Anspruch 1, wobei der erste Kupplungsmechanismus (52) und der zweite Kupplungsmechanismus (53) Klauenmechanismen sind.

## Revendications

1. Unité d'entraînement hybride, comprenant :
un arbre d'entrée hybride (6) ;
un premier train épicycloïdal (20) accouplé audit arbre d'entrée hybride (6), comprenant :
une première roue solaire de train épicycloïdal (21) ;
un premier porte-satellite de train épicycloïdal (24) ; et
une première couronne de train épicycloïdal (23) ;
un deuxième train épicycloïdal (30) couplé audit premier train épicycloïdal (20), comprenant :
une deuxième roue solaire de train épicycloïdal (31) ;
un deuxième porte-satellite de train épicycloïdal (34) ; et
une deuxième couronne de train épicycloïdal (33) ;
une première machine électrique (EMA) couplée à ladite première roue solaire de train épicycloïdal (21) ;
une deuxième machine électrique (EMB) couplée à ladite première couronne de train épicycloïdal (23) ;
un premier mécanisme d'embrayage (52) configuré pour décharger sélectivement ledit deuxième train épicycloïdal (30) ;
un deuxième mécanisme d'embrayage (53) configuré pour coupler sélectivement ladite deuxième couronne de train épicycloïdal (33) à un logement d'unité d'entraînement hybride (16) ;
un troisième mécanisme d'embrayage (51) ;
un arbre de sortie (9) ; et
**caractérisé par** :
ledit premier porte-satellite de train épicycloïdal (24) est couplé audit arbre d'entrée hybride (6) et ladite deuxième roue solaire de train épicycloïdal (31) est couplée à ladite première couronne de train épicycloïdal (23),
ledit deuxième porte-satellite de train épicycloïdal (34) est couplé sélectivement à ladite première roue solaire de train épicycloïdal (21) par ledit premier mécanisme d'embrayage (52),
ledit deuxième porte-satellite de train épicycloïdal (34) est couplé audit arbre de sortie (9),
ladite première couronne de train épicycloïdal (23), ladite deuxième e roue solaire de train épicycloïdal (31) et ladite deuxième machine électrique (EMB) sont toutes couplées sélectivement audit arbre de sortie (9) par ledit troisième mécanisme d'embrayage (51), et
ledit deuxième porte-satellite de train épicycloïdal (34) est couplé audit arbre de sortie (9) par une pluralité d'engrenages (35, 36, 37, 38).

2. Unité d'entraînement hybride selon la revendication 1, dans laquelle lesdits premier mécanisme d'embrayage (52), deuxième mécanisme d'embrayage (53) et troisième mécanisme d'embrayage (51) sont choisis dans le groupe comprenant un embrayage à bain d'huile, un embrayage à sec, un embrayage à griffes et un embrayage multidisque.

3. Unité d'entraînement hybride selon la revendication 1, dans laquelle lesdits premier mécanisme d'embrayage (52) et deuxième mécanisme d'embrayage (53) sont des embrayages à griffes.
